# EUROPÄISCHE PATENTANMELDUNG

(11) **EP 1 762 927 A2**
(43) Veröffentlichungstag der Anmeldung: **14.03.2007**
(21) Anmeldenummer: 06019086.5
(22) Anmeldetag: 12.09.2006
(51) Int. Cl.: G06F 3/048

(54) **Verfahren zur ereignisabhängigen Dynamisierung einer Menüleiste eines Datenverarbeitungsgeräts**

(30) Priorität: 13.09.2005 DE 102005043625
(71) Anmelder: Vodafone Holding GmbH, 40213 Düsseldorf (DE)
(72) Erfinder: Fehnert, Ben, London, SW9 9TD (GB); Foley, Peter, St. Albans, AL3 5LG (GB)
(74) Vertreter: Müller, Thomas

(57) **Zusammenfassung**

Es wird unter anderem ein Verfahren zum dynamischen Umschalten eines Anzeigenbereichs (16) von Menüpunkten (15) einer Menüleiste (11) einer Anzeige (10) eines Datenverarbeitungsgeräts offenbart, das die Schritte aufweist: beim Aktivieren eines der Menüpunkte (15) durch einen Anwender, Anzeigen eines Anzeigenbereichs (16) zu dem Menüpunkt (15); Ausführen eines Programmobjekts, das eine Übersichtsinformation (17) zu dem Menüpunkt (15) in dem Anzeigenbereich (16) darstellt; Feststellen des Vorliegens einer Umschaltbedingung; beim Erfüllen der Umschaltbedingung, Anzeigen einer vorgegebenen Menüauswahl (18) zu einem Programmobjekt, das dasselbe Programmobjekt sein kann wie das zur Anzeige der Übersichtsinformation (17) verwendete oder ein anderes, in dem Anzeigenbereich. Ein weiterer Aspekt beschreibt ein Verfahren zum ereignisabhängigen Umschalten zwischen Menüsymbolen in einer Menüleiste und zum Zuweisen eines Hintergrundbereichs einer Anzeige zur Ausgabe eines Programmobjekts.

## Beschreibung

Die vorliegende Erfindung betrifft Verfahren zum dynamischen Umschalten des Anzeigenbereichs von Menüpunkten einer Menüleiste, zum ereignisabhängigen Umschalten zwischen Menüsymbolen in einer Menüleiste und zum Zuweisen eines Hintergrundbereichs einer Anzeige zur Ausgabe eines Programmobjekts.

Im Stand der Technik sind Menüleisten von Anzeigen von Datenverarbeitungsgeräten bekannt, die dem Starten von Programmen dienen und zumeist aus einer Reihe von nebeneinander angeordneten Menüpunkten, wie Menüsymbolen (Icons) bestehen, die ein Programmobjekt (in der Regel ein Anwendungsprogramm) symbolisieren und bei deren Anklicken mittels einer Maus oder eines anderen geeigneten Instrumentariums (Tasten, berührungssensitiver Bildschirm, Scrollrad), das zugehörige Programmobjekt gestartet wird. Implementierungen solcher Menüleisten finden sich beispielsweise bei verschiedenen Betriebssystemen für Computer. Verschiedene Arten von Menüleisten finden sich ferner bei mobilen Datenverarbeitungsgeräten, wie PDAs (Personal Digital Assistant) oder Mobiltelefonen, bei denen auf einer kleinen Anzeigefläche ein rascher Zugriff auf die zur Verfügung stehende Programmfunktionalität gewährleistet sein muss.

Es ist ferner bekannt, solche Menüsymbole nach Starten des zugewiesenen Programmobjekts durch das Programmobjekt so modifizieren zu lassen, dass sie bestimmte Informationen, die von dem Programmobjekt ermittelt bzw. bereitgestellt werden, anzeigen. Als Beispiel sei das Programmsymbol einer Aktivitätsanzeige der CPU (Central Processing Unit) des Datenverarbeitungsgeräts genannt oder die verkleinerte Darstellung des vom Programmobjekt aktuell bearbeiteten Dokuments und dergleichen.

Die vorbekannten Menüleisten sind damit jedoch nur sehr eingeschränkt dynamisiert, indem sie in der Regel allerhöchstens zwischen nicht-laufendem und laufendem Programm unterscheiden und bei laufendem Programm zusätzlich Informationen darstellen.

Weiterhin ist es bekannt, insbesondere Menüleisten eines einzelnen Programms so auszugestalten, dass bei ihrem Aktivieren ein Menü mit verschiedenen Auswahloptionen ausklappt, von denen jede einzelne bei Aktivierung eine Funktion innerhalb des Programmobjekts, zu dem die Menüleiste gehört, startet. Diese Menüpunkte sind jedoch nur innerhalb eines einzelnen Programms zugewiesen und sind nicht als Menüleisten im Sinne der vorliegenden Erfindung zu verstehen, die dem Starten von Programmobjekten und nicht der Bedienung einzelner Programmobjekte dienen.

Insbesondere bei mobilen Datenverarbeitungsgeräten, wie Mobiltelefonen oder dergleichen, ist die zur Verfügung stehende Anzeigenfläche zumeist so beschränkt, dass es wünschenswert wäre, die Menüleiste und die ihr zugewiesenen Funktionen flexibler zu nutzen.

Der Erfindung liegt daher die Aufgabe zugrunde, Verfahren bereitzustellen, die eine dynamischere und informationsdichtere Ausnutzung einer Menüleiste eines Datenverarbeitungsgerätes, insbesondere eines Mobiltelefons, ermöglichen.

Diese Aufgabe wird erfindungsgemäß gelöst durch die Verfahren gemäß den unabhängigen Patentansprüchen 1, 6 und 8. Weitere vorteilhafte Ausgestaltungen, Details und Aspekte der vorliegenden Erfindung ergeben sich aus den abhängigen Patentansprüchen, der Beschreibung und den beigefügten Zeichnungen. Ausgestaltungen, Details und Aspekte, die im Zusammenhang mit einem bestimmten Erfindungsaspekt beschrieben sind, gelten dabei jeweils auch im Zusammenhang mit den jeweils anderen Erfindungsaspekten, und entsprechend umgekehrt.

Der Erfindung liegt das Prinzip zugrunde, die Menüleiste und die über die Menüleiste zugänglichen Menüs mit zusätzlichen Funktionalitäten auszustatten. Das im Rahmen der verschiedenen Erfindungsaspekte offenbarte Verfahren stellt eine Form der Steuerung eines Datenverarbeitungsgeräts, beziehungsweise von dessen Anzeigebereich, dar.

Dementsprechend ist die Erfindung in einem ersten Aspekt gerichtet auf ein Verfahren zum dynamischen Umschalten des Anzeigenbereichs von Menüpunkten einer Menüleiste einer Anzeige eines Datenverarbeitungsgeräts, gekennzeichnet durch folgende Schritte: beim Aktivieren eines der Menüpunkte durch einen Anwender, Anzeigen eines Anzeigenbereichs zu dem Menüpunkt; Ausführen eines Programmobjekts, das eine Übersichtsinformation zu dem Menüpunkt in dem Anzeigenbereich darstellt; Feststellen des Vorliegens einer Umschaltbedingung; beim Erfüllen der Umschaltbedingung, Anzeigen einer vorgegebenen Menüauswahl zu einem Programmobjekt, das dasselbe Programmobjekt sein kann wie das zur Anzeige der Übersichtsinformation oder ein anderes, im dem Anzeigenbereich.

Unter einer Menüleiste ist dabei im Sinne der vorliegenden Erfindung ein Bereich auf der Anzeige eines Datenverarbeitungsgeräts zu verstehen, das Menüpunkte, die beispielsweise Menüsymbole sind, die einem Programmobjekt zugeordnet sind, enthält. Ein Menüpunkt ist dabei ein Teilbereich einer Menüleiste, der einem bestimmten Programmobjekt zugewiesen worden ist und bei dessen Aktivieren eine Reaktion erfolgen kann, beispielsweise das Ausführen eines Programmobjektes oder das Anzeigen eines Anzeigenbereichs, beispielsweise eines Ausklappmenüs mit ein oder mehreren Auswahloptionen.

Der Anzeigenbereich eines Menüpunkts ist der Bereich der Anzeige eines Datenverarbeitungsgerätes, der beim Aktivieren eines Menüpunkts zur Anzeige einer Menüauswahl mit Auswahloptionen bestimmt ist. Unter einem Aktivieren eines Menüpunkts durch einen Anwender wird verstanden, dass dieser mittels einer zur Verfügung stehenden Eingabefunktion gegenüber dem Betriebssystem klar macht, dass eine Funktionalität zum aktivierten Menüpunkt ablaufen soll. Dies kann beispielsweise bei Touch-Screens durch Berühren des Bildschirms an der Stelle des Menüpunkts erfolgen, mittels Anklicken durch eine Maus, bei Tastenbedienung durch Weiterspringen eines Aktivierungscursors bis zu dem zu aktivierenden Menüpunkt, und dergleichen. Beim Aktivieren eines Menüpunkts wird der Anzeigenbereich zu dem Menüpunkt angezeigt. Im Stand der Technik würde hier sofort eine Darstellung der einzelnen Untermenüpunkte einer Menüauswahl erscheinen, um verschiedene Funktionen aufrufbar zu machen. Stattdessen wird jedoch erfindungsgemäß zunächst ein Programmobjekt (oder eine Funktion des dem Menüpunkt zugewiesenen Programmobjekts) ausgeführt, das eine Übersichtsinformation zu dem Menüpunkt in dem Anzeigenbereich darstellt, das heißt anzeigt.

Nach Anzeige der Übersichtsinformation wartet das erfindungsgemäße Verfahren auf das Eintreten einer so genannten Umschaltbedingung. Sofern oder sobald die Umschaltbedingung erfüllt ist, wird eine vorgegebene Menüauswahl zu einem Programmobjekt angezeigt, wie im Stand der Technik bekannt. Die Anzeige der Menüauswahl erfolgt in demselben Anzeigenbereich, in dem zuvor die Übersichtinformation dargestellt wurde.

Im Endeffekt wird damit der zuvor nur für die Menüauswahl vorgesehene Anzeigenbereich in seiner Funktionalität verdoppelt, da er nunmehr sowohl der Menüauswahl dienen kann als auch der Anzeige einer Übersichtsinformation, wobei durch eine Umschaltbedingung zwischen den beiden Darstellungen gewechselt werden kann.

Verschiedene Möglichkeiten stehen als Umschaltbedingung zur Verfügung. Eine Umschaltbedingung kann darin bestehen, dass der Benutzer innerhalb eines vorgegebenen Zeitraums keinen anderen Menüpunkt aktiviert beziehungsweise außerhalb der Menüleiste und des Anzeigenbereichs Eingaben wie Mausklicks vornimmt, während eine andere Umschaltbedingung darin bestehen kann, dass der Benutzer den Anzeigenbereich aktiviert, beispielsweise durch Anklicken mit einer Maus, Berühren eines berührungssensitiven Bildschirms innerhalb des Anzeigenbereichs oder durch Verwenden einer Scroll-Down-Taste und dergleichen. Die beiden Umschaltbedienungen können auch miteinander kombiniert werden, so dass unabhängig von einer inaktivität des Anwenders nach einem vorgegebenen Zeitraum, beispielsweise 1 bis 5 Sekunden, die Übersichtsinformation ausgeblendet und die Menüauswahl eingeblendet wird.

In einer bevorzugten Ausführungsform weist die Menüauswahl zumindest eine Auswahloption auf, bei deren Aktivierung ein Programmobjekt aufgerufen wird, das in einem festgelegten Bereich der Anzeige Informationen anzeigt, wobei ein Fenstermanagerprogrammobjekt zur Verwaltung der Anzeige des Datenverarbeitungsgeräts diesen Bereich der Anzeige stets unmittelbar vor einem Bildschirmhintergrund, aber hinter anderen vom Fenstermanagerprogrammobjekt angezeigten Fenstern anzeigt.

Diese bevorzugte Ausführungsform der vorliegenden Erfindung stellt eine weitere Dynamisierung der Menüleiste dergestalt bereit, das ein Menüauswahlpunkt dazu dient, einen bestimmten Bereich eines Bildschirmhintergrunds zur Anzeige von Informationen von einem Programmprojekt zu reservieren. Dabei handelt es sich um das Programmobjekt, das dem Menüpunkt einer Menüauswahl zugeordnet ist, das diesen Bereich dann verwendet, um Informationen unabhängig von der Darstellung von Fenstern und dergleichen des Programmobjekts unmittelbar auf dem Bildschirmhintergrund darzustellen.

Im Sinne der vorliegenden Erfindung ist ein Fenstermanagerprogrammobjekt ein Programmobjekt beziehungsweise ein Bestandteil eines Betriebssystems, welches die Verwaltung der einzelnen Bildpunkte der Anzeige eines Datenverarbeitungsgeräts übernimmt. Der Begriff als solcher ist im Stand der Technik Fachleuten geläufig und Fenstermanager werden als zentrale Verwaltungsinstanz für Anzeigeninhalte von graphischen Benutzeroberflächen verwendet. Graphische Benutzeroberflächen, die mit Fenstern zur Darstellung von Informationen arbeiten, stellen an solchen Stellen der Anzeige, an denen sich aktuell keine Fenster befinden, einen so genannten Bildschirmhintergrund dar. Der Bildschirmhintergrund kann im einfachsten Fall durch Darstellen von Bildpunkten in einer bestimmten, einheitlichen Hintergrundfarbe erzeugt werden, kann jedoch ebenfalls die Darstellung von graphischen Motiven wie Bildern oder Fotos beinhalten, die an den Stellen, an denen Fenster erscheinen sollen, nicht mehr dargestellt werden. Es ergibt sich damit der Eindruck eines Hintergrunds, vor dem sich die Fenster der Programmobjekte befinden. In Fenster-Bereichen der Anzeige werden dann statt des Hintergrunds die entsprechenden Fenster der Programmobjekte dargestellt. Erfindungsgemäß erfolgt nunmehr die Informationsdarstellung ohne ein Fenster von einem ausgewählten Programmobjekt direkt auf dem Bildschirmhintergrund. Das Programmobjekt kann also beispielsweise einen Text oder eine graphische Information unmittelbar vor dem Bildhintergrund ablegen, ohne dass es dazu ein Fenster darstellen müsste. Der Benutzer kann die Anzeige der Informationen auf dem Bildschirmhintergrund nicht verschieben, so dass er stets weiß, wo sich diese befindet, kann aber andererseits die Fenster gestarteter Programme über den Bereich legen, so dass die im festgelegten Bereich der Anzeige dargestellten Informationen nicht mehr sichtbar sind.

Vorzugsweise ist zumindest einer der Menüpunkte der Menüleiste ein Menüsymbol (Icon), wie es üblicherweise zur Darstellung von Programmobjekten verwendet wird. Es ist genau so möglich, die Menüpunkte teils oder insgesamt als Textbereiche darzustellen, beispielsweise mit dem Namen des dem Menüpunkt zugewiesenen Programmobjekts.

In einer weiteren bevorzugten Ausführungsform ist das Verfahren in dem Fall, dass zumindest einer der Menüpunkte der Menüleiste ein Menüsymbol ist, dadurch gekennzeichnet, dass beim Feststellen des Vorliegens eines relevanten Ereignisses zu einem Programmobjekt, das dem Menüsymbol zugeordnet ist, ein Ereignismenüsymbol anstelle des normalen Menüsymbols angezeigt wird. Auch ist vorstellbar, dass anstelle eines Menütexts als Menüpunkt ein Ereignismenüsymbol oder ein Ereignismenütext dargestellt wird. Diese dritte Form der Dynamisierung der Menüleiste gemäß der vorliegenden Erfindung ermöglicht dem Anwender, auf einen Blick zu erfassen, ob zu einem bestimmten Programmobjekt ein neues relevantes Ereignis vorliegt, indem er lediglich die Menüleiste betrachtet und das Programmobjekt entweder nicht starten oder zumindest nicht in den Vordergrund der Anzeige bringen muss. Der Anwender kann dann als Reaktion auf das Erscheinen des Ereignissymbols oder des Ereignistexts das Programmobjekt starten beziehungsweise in den Vordergrund bringen, um von dem Ereignis nähere Kenntnis zu gewinnen.

Zahlreiche Informationen können als Übersichtsinformationen im Anzeigenbereich von Menüpunkten dargestellt werden. So kann die Übersichtsinformation vorzugsweise ein Programmsymbol und/oder einen Programmnamen umfassen, um klarzustellen, um welches Programm es sich bei dem Menüsymbol handelt.

Die Übersichtsinformation ist weiterhin vorzugsweise eine zum Zeitpunkt der Aktivierung (des Menüsymbols und des Anzeigenbereichs) vom Programmobjekt als am relevantesten angesehene Information.

Die Menüpunkte können den unterschiedlichsten Programmobjekten zugeordnet sein. Nachfolgend werden bevorzugte Kombinationen von spezifischen Programmobjekten und Übersichtsinformationen für diese Programmobjekte vorgestellt, wobei der besondere Schwerpunkt auf Programme gelegt werden soll, die für Kleingeräte wie PDAs und Mobiltelefone häufig Verwendung finden. Dabei ist die Erfindung natürlich nicht auf die genannten Beispiele beschränkt. Die nachfolgend beschriebenen Beispiele können sowohl jeweils einzeln als auch in jeder beliebigen Kombination vorliegen beziehungsweise verwirklicht sein.

Ein Menüpunkt kann einem Alarmprogrammobjekt zugewiesen sein und die Übersichtsinformation kann eine Alarmzeit, vorzugsweise die nächste Alarmzeit, umfassen. Auch kann angezeigt werden, dass die Alarmzeit erreicht worden ist. Unter einem Erreichen einer Alarmzeit ist dabei zu verstehen, dass ein Programmobjekt feststellt, dass eine Uhr im Datenverarbeitungsgerät übereinstimmt mit einer Alarmzeit, während das Vorliegen eines aktiven Alarms bedeuten soll, dass das Erreichen der Alarmzeit bereits überschritten ist. Alarme werden bei mobilen Datenverarbeitungsgeräten eingesetzt, um den Anwender an Termine und dergleichen zu erinnern oder ihn durch akustische Signale zu wecken. Der Anwender kann Alarmzeiten in das Gerät eingeben, die dann vom entsprechenden Programmobjekt überwacht und signalisiert werden.

Ein Menüpunkt kann einem Uhrzeitprogrammobjekt (das der Bestimmung und Anzeige von Uhrzeiten dient) zugewiesen sein und die Übersichtsinformation kann die aktuelle Uhrzeit umfassen.

Ein Menüpunkt kann einem Wetterprogrammobjekt zur Auswertung und Darstellung von über einem Netzwerk erhaltenen Wetterinformationen zugewiesen sein und die Übersichtsinformation kann die Temperatur und/oder Bewölkung an einem vorgegebenen Ort und/oder dem aktuellen Standort des Datenverarbeitungsgeräts umfassen. Das Netzwerk kann hierbei das Internet, ein anderes Datennetzwerk, oder ein Drahtlosnetzwerk wie ein WLAN-IP-Netzwerk, ein GSM- oder UMTS-Netzwerk sein.

Ein Menüpunkt kann einem Push-Verwaltungs-Programmobjekt zur Verwaltung von über ein Netzwerk erhältlichen Datenobjekten und/oder Programmobjekten zugewiesen sein und die Übersichtsinformation kann eine Information zu einem aktuellsten, im Netzwerk erhältlichen Datenobjekt und/oder Programmobjekt umfassen. Auf diese Weise kann der Benutzer sehen, welche neue Daten oder Programme auf einem Server des Netzwerks für ihn zur Verfügung stehen und sich diese daraufhin per Anforderung zusenden lassen. Dies ermöglicht eine Auswahl von per Push-Technologie von über ein Netzwerk versendeten Programm- oder Datenobjekten. Das Netzwerk entspricht dem oben spezifizierten. Genauso ist es möglich, die Anzeige der Übersichtsinformation für bereits per Push-Technologie auf das Datenverarbeitungsgerät gesendete Programm- und Datenobjekte zu nutzen.

Ein Menüpunkt kann ein Gebühren-Verwaltungsprogrammobjekt zur Berechnung von bei mit dem Datenverarbeüungsgerät benutzbaren gebührenpflichtigen Dienstleistungen anfallenden Gebühren zugewiesen sein und die Übersichtsinformation kann eine Gebühreninformation für in Anspruch genommene Dienstleistungen umfassen. Gebührenpflichtige Dienstleistungen können beispielsweise bei einem Mobiltelefon Gebühreninformationen über Telefonate oder übertragene Dateninformationen sein oder die in Anspruchnahme von externen Dienstleistungen wie beispielsweise der Darstellung von Wetterinformationen, Navigationsdaten und dergleichen.

Die vorliegende Erfindung ist nicht auf bestimmte Menüpunkte beschränkt. Selbstverständlich ist die Erfindung auch auf andere Menüpunkte anwendbar.

Das Datenverarbeitungsgerät kann vorzugsweise ein Mobiltelefon sein und ein Menüpunkt kann einem Verwaltungsprogrammobjekt zur Verwaltung entgangener Anrufe bei dem Datenverarbeitungsgerät zugewiesen sein und die Übersichtsinformation kann Informationen zum zuletzt entgangenen Anruf (oder den letzten entgangenen Anrufen) umfassen. Hierbei sind die Informationen zum zuletzt entgangenen Anruf vorzugsweise der Zeitpunkt des Anrufs und/oder die Telefonnummer des Anrufers und/oder eine im Datenverarbeitungsgerät verfügbare Namensinformation zum Anrufer.

Vorzugsweise ist ein Menüpunkt einem Nachrichten-Programmobjekt zugewiesen und die Übersichtsinformation kann den Eingang einer neuen Nachricht und/oder den Sender der Nachricht und/oder den Betreff der Nachricht umfassen. Die Nachricht kann eine E-Mail, eine SMS, eine MMS oder eine andere Art von über ein Netzwerk erhältlicher Nachricht sein.

Ein Menüpunkt kann einem Terminverwaltungsprogrammobjekt zugewiesen sein und die Übersichtsinformation kann Termine des aktuellen Tags oder den nächsten Termin mit Zeitangabe und/oder dem Termin zugewiesene Aktivität umfassen.

Allgemein wurden obenstehend verschiedene typische Programme für mobile Datenverarbeitungsgeräte wie PDAs oder Mobiltelefone vorgestellt. Es versteht sich, dass die Erfindung grundsätzlich auf sämtliche für solche und andere Datenverarbeitungsgeräte geeignete Programme anwendbar ist, auch wenn diese hier nicht im Detail aufgeführt sind.

Ein weiteres erfindungsgemäßes Verfahren ist zum Ereignis-abhängigen Umschaltens zwischen Menüsymbolen in einer Menüleiste einer Anzeige eines Datenverarbeitungsgeräts bestimmt, wobei das Verfahren durch die folgenden Schritte gekennzeichnet ist: Anzeigen von Standardmenüsymbolen zu Programmobjekten in der Menüleiste; Feststellen des Vorliegens eines relevanten Ereignisses zu einem der Programmobjekte; und Anzeigen eines Ereignissymbols anstelle des Standardmenüsymbols für das Programmobjekt, für das sich das relevante Ereignis ereignet hat.

Diese Form der Dynamisierung der Menüleiste gemäß der vorliegenden Erfindung ermöglicht dem Anwender, auf einen Blick zu erfassen, ob zu einem bestimmten Programmobjekt ein neues relevantes Ereignis vorliegt, indem er lediglich die Menüleiste betrachtet und das Programmobjekt entweder nicht starten oder zumindest nicht in den Vordergrund der Anzeige bringen muss. Der Anwender kann dann als Reaktion auf das Erscheinen des Ereignissymbols oder des Ereignistexts das Programmobjekt starten beziehungsweise in den Vordergrund bringen, um von dem Ereignis nähere Kenntnis zu gewinnen.

Das Verfahren kann als weiteren Schritt ein Feststellen aufweisen, dass ein Anwender des Datenverarbeitungsgeräts mit dem Datenverarbeitungsgerät in einer Weise interagiert hat, dass eine fortgesetzte (andauernde) Anzeige des Ereignissymbols nicht mehr notwendig ist; und Anzeigen des Standardsymbols für das Programmobjekt.

Durch diesen zusätzlichen Verfahrensschritt wird sichergestellt, dass nach Starten des Verfahrens nicht ein einmaliges Auftreten eines relevanten Ereignisses dazu führt, das bis zum Ende der Verfahrensdurchführung statt des normalen Menüsymbols ein Ereignismenüsymbol angezeigt wird, sondern, dass das Verfahren sich dynamisch an die Reaktionen des Benutzers auf das Wahrnehmen des Ereignismenüsymbols reagiert.

Zur Implementierung dieses Verfahrenschritts gemäß der Erfindung stehen zahlreiche Möglichkeiten zur Verfügung. Wenn das Umschalten von einem normalen Menüsymbol zum Ereignismenüsymbol durch das Programmobjekt, welches das Menüsymbol repräsentiert, durchgeführt wird, kann die entsprechende Funktionalität einfach im Programmobjekt selbst implementiert werden, indem ein Ablaufplan innerhalb der Funktionen des Programmobjekts festgelegt wird, die der Anwender durchlaufen muss, bis sichergestellt ist, dass er in einer adäquaten Weise auf das dem Umschalten zugrunde liegende Ereignis reagiert hat, insbesondere ersichtlich ist, dass er das Vorliegen des Ereignisses aktiv wahrgenommen hat.

Im nachfolgenden sollen einige beispielhafte bevorzugte Ausführungsformen dieses Aspekts der Erfindung dargestellt werden. Dabei werden verschiedene Ausführungsformen für Programmobjekte beschrieben, wobei die Erfindung natürlich nicht auf die konkret beschriebenen Beispiele beschränkt ist. Die nachfolgend beschrieben Beispiele können sowohl jeweils einzeln als auch in jeder beliebigen Kombination vorliegen beziehungsweise verwirklicht sein/werden.

Beispielsweise kann vorgesehen sein, dass das Programmobjekt ein Alarmprogrammobjekt ist und das relevante Ereignis das Erreichen der Alarmzeit oder das Vorliegen eines aktiven Alarms ist. Unter einem Erreichen einer Alarmzeit ist dabei zu verstehen, dass ein Programmobjekt feststellt, dass eine Uhr im Datenverarbeitungsgerät übereinstimmt mit einer Alarmzeit, während das Vorliegen eines aktiven Alarms bedeuten soll, dass das Erreichen der Alarmzeit bereits überschritten ist. Alarme werden bei mobilen Datenverarbeitungsgeräten eingesetzt, um den Anwender an Termine, und dergleichen zu erinnern oder ihn durch akustische Signale zu wecken. Der Anwender kann Alarmzeiten in das Gerät eingeben, die dann vom entsprechenden Programmobjekt überwacht und signalisiert werden.

Das Programmobjekt kann auch ein Wetterprogrammobjekt zur Auswertung und Darstellung von über ein Netzwerk enthaltenen Wetterinformationen sein und das relevante Ereignis kann eine Änderung der Wetterinformation gegenüber derjenigen Wetterinformation sein, die ein Anwender des Datenverarbeitungsgeräts zuletzt angesehen hat. Auf diese Weise ist es möglich, bei Änderungen der Wetterinformation den Anwender umgehend über eine sich möglicherweise ändernde Wetterlage zu informieren, indem ein entsprechendes Ereignismenüsymbol angezeigt wird. Hier besteht ebenfalls die Möglichkeit, verschiedene Ereignismenüsymbole auszuwählen, abhängig von der Art der Wetteränderung, oder dem sich als nächstes einstellenden Wetter (Pfeil nach oben, Pfeil nach unten, Wolken, Sonnensymbol und dergleichen). Das Programmobjekt stellt bei dieser Ausführungsform fest, wann der Anwender zuletzt die Wetterinformationen vom Programmobjekt betrachtet hat und speichert den Wetterstatus, um ihn danach periodisch oder nach Eingehen neuer Wetterinformationen mit den eingegangenen Wetterinformationen zu vergleichen, um Änderungen festzustellen.

Das Programmobjekt kann ebenfalls ein Push-Verwaltungs-Programmobjekt zur Verwaltung von über ein Netzwerk erhältlichen Datenobjekten und/oder Programmobjekten sein und das relevante Ereignis kann die Verfügbarkeit eines neuen, im Netzwerk erhältlichen Datenobjekts und/oder Programmobjekts sein. Damit kann ein entsprechendes Push-Verwaltungsprogramm dem Anwender das Vorliegen neuer Daten- oder Programmobjekte signalisieren gegebenenfalls auch durch verschiedene Ereignismenüsymbole entsprechend der Art des neu verfügbaren Datenobjekts. Der Anwender kann dann in das Programmobjekt respektive die Informationen dazu hineinspringen und entscheiden, ob er das neue Programm oder Datenobjekt erhalten möchte oder er kann zumindest bestätigen, dass er wahrgenommen hat, dass ein neues Programm oder Datenobjekt vorliegt. Diese Information kann dann ebenfalls verwendet werden, um wieder vom Ereignismenüsymbol zum Standardmenüsymbol umzuschalten.

Des Weiteren kann ein Programmobjekt ein Gebühren-Verwaltungsprogrammobjekt zur Berechnung von bei mit dem Datenverarbeitungsgerät benutzbaren, gebührenpflichtigen Dienstleistungen sein und das relevante Ereignis kann eine periodische Änderung der Gebühreninformation für in Anspruch genommene Dienstleistungen sein. Hiermit ist es möglich, einen Gebührenzähler zu implementieren, der in der Menüleiste angezeigt wird. Dieser kann beispielsweise die Zahl der Einheiten bei einheitsabhängigen (Telefoneinheiten, Datenübertragungsmengen) Gebühren, oder ein Betrag in einer eingestellten Währung sein, kann jedoch auch einfach eine Darstellung sein, das eine bestimmte Zeit, ein bestimmter Gebührenbetrag oder eine bestimmte Anzahl Gebühreneinheiten überschritten worden ist, entweder standardmäßig eingestellt oder nach Benutzervorwahl.

In einer bevorzugten Ausführungsform ist die Datenverarbeitung ein Mobiltelefon und das Programmobjekt ist ein Verwaltungsprogrammobjekt zur Verwaltung entgangener Anrufe bei dem Datenverarbeitungsgerät, wobei das relevante Ereignis ein neuer entgangener Anruf ist. Die Rückschaltung auf das normale Menüsymbol kann in diesem Fall beispielsweise dann erfolgen, wenn der Anwender die Liste entgangener Anrufe angesehen hat und/oder er den entgangenen Anruf durch Rückruf beantwortet hat.

Weiterhin kann das Programmobjekt vorzugsweise ein Nachrichten-Programmobjekt sein und das relevante Ereignis der Eingang einer neuen Nachricht. Eine Nachricht kann beispielsweise in bevorzugten Ausführungsformen eine E-Mail, eine SMS, eine MMS oder eine andere Art von über ein Netzwerk erhältlicher Nachricht sein. Das angezeigte Ereignismenüsymbol kann ein der eingegangenen Nachricht entsprechendes Symbol sein, beispielsweise ein Symbol, das geeignet ist, in besonderer Weise die Art der eingegangenen Nachricht oder den Absender (beispielsweise gruppiert nach Präferenzgruppen) zu kennzeichnen.

In einer weiteren bevorzugten Ausführungsform kann das Programmobjekt ein Terminverwaltungsprogrammobjekt sein und das relevante Ereignis kann das Eintreten eines Terminzeitpunkts sein. Dies ist ähnlich wie beim Alarmprogrammobjekt, und weist tatsächlich eine überlappende Funktionalität mit diesem auf, wobei Terminverwaltungsprogramme zumeist über zusätzliche Eingabemöglichkeiten für die Klassifizierung von Terminen und eine Textinformation zur Information über die Art des Termins verfügen.

Gemäß noch einem weiteren Aspekt ist die Erfindung gerichtet auf ein Verfahren zum Zuweisen eines Bereichs einer von einem Fenstermanager-Programmobjekt verwalteten Anzeige eines Datenverarbeitungsgeräts zu einem Programmobjekt, gekennzeichnet durch die folgenden Schritte: Darstellen einer Menüleiste mit einer Mehrzahl von Menüpunkten in einem ersten Bereich der Anzeige; beim Aktivieren eines Menüpunkts der Menüleiste durch einen Anwender, Anzeigen eines Menüs zu dem aktivierten Menüpunkt, wobei das Menü zumindest eine Auswahloption aufweist, bei deren Aktivierung ein Programmobjekt aufgerufen wird, das in einen zweiten, festgelegten Bereich der Anzeige Informationen anzeigt, wobei das Fenstermanager-Programmobjekt diesen Bereich der Anzeige stets unmittelbar vor einem Bildschirmhintergrund, aber hinter anderen vom Fenstermanager-Programmobjekt angezeigten Fenstern anzeigt.

Dabei ist eine Menüleiste wie oben definiert, zu verstehen, ein Menüpunkt ist eine textliche Darstellung oder ein Symbol innerhalb der Menüleiste, die einem Programmobjekt zugeordnet ist, das Aktivieren eines Menüpunkts erfolgt wie oben unter dem ersten Erfindungsaspekt erläutert, und die Auswahloption ist ein Teil des Menüs, das beispielsweise wie oben dargestellt, in einem Anzeigenbereich des Menüs dargestellt wird und bei Aktivierung in beschriebener Weise ein Programmobjekt oder eine Funktion in einem Programmobjekt aufruft.

Dieser Aspekt der vorliegenden Erfindung stellt eine weitere Dynamisierung der Menüleiste dergestalt bereit, das ein Menüauswahlpunkt dazu dient, einen bestimmten Bereich eines Bildschirmhintergrunds zur Anzeige von Informationen von einem Programmprojekt zu reservieren. Dabei handelt es sich um das Programmobjekt, das dem Menüpunkt einer Menüauswahl zugeordnet ist, das diesen Bereich dann verwendet, um Informationen unabhängig von der Darstellung von Fenstern und dergleichen des Programmobjekts unmittelbar auf dem Bildschirmhintergrund darzustellen.

Im Sinne der vorliegenden Erfindung ist ein Fenstermanagerprogrammobjekt ein Programmobjekt beziehungsweise ein Bestandteil eines Betriebssystems, welches die Verwaltung der einzelnen Bildpunkte der Anzeige eines Datenverarbeitungsgeräts übernimmt. Der Begriff als solcher ist im Stand der Technik Fachleuten geläufig und Fenstermanager werden als zentrale Verwaltungsinstanz für Anzeigeninhalte von graphischen Benutzeroberflächen verwendet. Graphische Benutzeroberflächen, die mit Fenstern zur Darstellung von Informationen arbeiten, stellen an solchen Stellen der Anzeige, an denen sich aktuell keine Fenster befinden, einen so genannten Bildschirmhintergrund dar. Der Bildschirmhintergrund kann im einfachsten Fall durch Darstellen von Bildpunkten in einer bestimmten, einheitlichen Hintergrundfarbe erzeigt werden, kann jedoch ebenfalls die Darstellung von graphischen Motiven wie Bildern oder Fotos beinhalten, die an den Stellen, an denen Fenster erscheinen sollen, nicht mehr dargestellt werden. Es ergibt sich damit der Eindruck eines Hintergrunds, vor dem sich die Fenster der Programmobjekte befinden. In Fenster-Bereichen der Anzeige werden dann statt des Hintergrunds die entsprechenden Fenster der Programmobjekte dargestellt. Erfindungsgemäß erfolgt nunmehr die Informationsdarstellung ohne ein Fenster von einem ausgewählten Programmobjekt direkt auf dem Bildschirmhintergrund. Das Programmobjekt kann also beispielsweise einen Text oder eine graphische Information unmittelbar vor dem Bildhintergrund ablegen, ohne dass es dazu ein Fenster darstellen müsste. Der Benutzer kann die Anzeige der Informationen auf dem Bildschirmhintergrund nicht verschieben, so dass er stets weiß, wo sich diese befindet, kann aber andererseits die Fenster gestarteter Programme über den Bereich legen, so dass die im festgelegten Bereich der Anzeige dargestellten Informationen nicht mehr sichtbar sind.

Der zweite Bereich ermöglicht eine flexiblere Darstellung von Informationen als ein Ereignismenüsymbol wie im oben beschriebenen Aspekt der Erfindung und gestattet damit die Anzeige von erheblich mehr Informationen als bei dem Ergebnis des Menüsymbols. Sie kann vom Umfang her in etwa der Information entsprechen, die im Anzeigenbereich gemäß dem ersten Aspekt der Erfindung dargestellt werden kann, kann jedoch speziell auf die Bedürfnisse des Anwenders abgestimmt werden, da sie dauerhaft auf dem Bildschirm verbleibt und damit vor allem weniger vergängliche oder nicht so schnelle erfassbare Informationen anzeigen kann.

Vorzugsweise ist der Bildschirmhintergrund ein Bild, eine Graphik, ein Muster oder eine einfarbige Fläche und die Anzeige der Informationen erfolgt so, dass die Informationen semi-transparent vor dem Bildschirmhintergrund angezeigt werden. Es ist allerdings auch vorstellbar, dass keine semi-transparente Darstellung (bei der der Hintergrund partiell sichtbar bleibt) erfolgt, sondern dass die Informationen an der Stelle ihrer Darstellung den Hintergrund überdecken.

Vorzugsweise ist der Bildschirmhintergrund ein Bild, eine Graphik, ein Muster oder eine einfarbige Fläche und die Anzeige der Informationen erfolgt in einer Farbe, die in einem gut erkennbaren Kontrast zur vorherrschenden Farbe des Bildschirmhintergrunds, das heißt des Bilds, der Graphik oder des Musters, und dergleichen, steht.

Im Folgenden werden verschiedene Möglichkeiten für konkrete Programmobjekte und die Darstellung von Hintergrundinformationen in bevorzugten Ausführungsformen genannt, wobei der Schwerpunkt wiederum auf Programme für portable Datenverarbeitungsgeräte gelegt wird. Dabei ist die Erfindung natürlich nicht auf die genannten Beispiele beschränkt. Die nachfolgend beschrieben Beispiele können sowohl jeweils einzeln als auch in jeder beliebigen Kombination vorliegen beziehungsweise verwirklicht sein/werden.

Beispielsweise kann das Programmobjekt ein Alarmprogrammobjekt sein und die Information kann den zumindest nächsten Alarm und/oder das Erreichen einer Alarmzeit und/oder das Vorliegen eines aktiven Alarms umfassen. Hier kann beispielsweise die Alarmzeit angezeigt werden sowie mit geeigneten Symbolen das Vorliegen eines Alarms.

In einer weiteren bevorzugten Ausführungsform ist das Programmobjekt ein Wetterprogrammobjekt zur Auswertung und Darstellung von über ein Netzwerk erhaltenen Wetterinformationen und die Information ist die Temperatur und/oder Bewölkung in einem vorgegebenen Ort und/oder dem aktuellen Standort des Datenverarbeitungsgeräts. Diese Darstellung im vorgesehenen zweiten Bereich ermöglicht es mit einem Blick (sofern keine Fenster überlagert sind) relevante Wetterinformationen zu sehen. Selbstverständlich ist vorstellbar, dass in dem Bereich auch detailliertere Informationen einschließlich einer Wetterkarte dargestellt werden könnten.

In einer weiteren bevorzugten Ausführungsform ist das Programmobjekt ein Push-Verwaltungs-Programmobjekt zur Verwaltung von über ein Netzwerk erhältlichen Datenobjekten und/oder Programmobjekten und die Information umfasst eine Information für zumindest ein aktuellstes, im Netzwerk erhältliches Datenobjekt und/oder Programmobjekt. Diese Information kann beispielsweise ein Programmname oder eine Textbeschreibung des Programms oder Datenobjekts sein sowie eine Information über den Zeitpunkt, an dem es im Netzwerk zur Verfügung gestellt worden ist. Auch ein Beispiel-Bildschirm der Anzeige des Programmobjektes im Netzwerk kann in dem zweiten Bereich dargestellt werden.

In einer weiteren Ausführungsform kann das Programmobjekt ein Gebühren-Verwaltungsprogrammobjekt zur Berechnung von bei mit dem Datenverarbeitungsgerät benutzbaren, gebührenpflichtigen Dienstleistungen sein und die Information kann zumindest eine Gebühreninformation für in Anspruch genommene Dienstleistungen umfassen.

Die Gebühreninformationen können dabei wie oben bereits bei den anderen Aspekten erläutert sein.

In einer weiteren bevorzugten Ausführungsform ist das Datenverarbeitungsgerät ein Mobiltelefon und das Programmobjekt ist ein Verwaltungsprogrammobjekt zur Verwaltung entgangener Anrufe bei dem Datenverarbeitungsgerät und die Information umfasst Informationen zu zumindest einem entgangenen Anruf.

Die Information für den zumindest einen entgangenen Anruf ist vorzugsweise der Zeitpunkt des Anrufs und/oder die Telefonnummer des Anrufers und/oder eine im Datenverarbeitungsgerät verfügbare Namensinformation zum Anrufer und dergleichen.

Weiterhin kann das Programmobjekt ein Nachrichtprogrammobjekt sein und die Information kann zumindest eine neue Nachricht und/oder den Sender der Nachricht und/oder den Betreff der Nachricht umfassen. Vorstellbar ist ebenfalls den Anfang der Nachricht darzustellen oder eine Zusammenfassung der Nachricht, sofern ein entsprechendes semantisches Zusammenfassungsprogrammobjekt oder Teilprogrammobjekt implementiert ist.

Die Nachricht kann eine E-Mail, eine SMS, eine MMS oder eine andere Art von über ein Netzwerk erhältlicher Nachricht sein.

Weiterhin kann das Programmobjekt vorzugsweise ein Terminverwaltungsprogrammobjekt sein und die Information kann Termine des aktuellen Tags oder den nächsten Termin mit Zeitangabe und/oder dem Termin zugewiesene Aktivität umfassen.

Es versteht sich, dass bevorzugterweise auch mehrere zweite Bereiche gleichzeitig vor dem Bildschirmhintergrund angezeigt werden können, wenn mehrere Programmobjekte entsprechend vom Benutzer aktiviert werden. Hierbei kann eine Funktion im Fenstermanagerprogramm implementiert werden, die diese Bereiche nach bestimmten Prioritäten oder chronologisch auf der Anzeige des Datenverarbeitungsgeräts anordnet oder eine entsprechende Anordnung der Benutzerauswahl überlässt.

In einer bevorzugten Ausführungsform der Erfindung sind die Menüpunkte und Menüsymbole der Menüleiste benutzerkonfigurierbar, so dass sich der Anwender des Datenverarbeitungsgerätes anhand seiner persönlichen Präferenzen eine individuelle Menüleiste assemblieren kann. Hierfür kann ein eigenes Konfigurationsprogrammobjekt vorgesehen sein oder die Konfiguration kann unmittelbar in Interaktion mit der Menüleiste (beispielsweise durch Drag and Drop von Menüsymbolen) erfolgen.

Besonders bevorzugt wird das Verfahren gemäß der vorstehend beschriebenen Erfindungsaspekte auf einem mobilen Endgerät wie einem Mobiltelefon oder einem PDA (Personal Digital Assistent) ausgeführt.

Zur Implementierung der vorgestellten erfindungsgemäßen Verfahren können verschiedene Ansätze verwendet werden. In einem Ansatz ist es möglich, die Menüleiste von einem eigenen Programm darstellen und verwalten zu lassen. Dieses greift dann zur Implementierung der Funktionen beispielsweise auf Datenbanken zurück, in denen die darzustellenden Informationen enthalten sind, beispielsweise einer Datenbank mit entgangenen Anrufen, einer Datenbank mit über ein Netzwerk verfügbaren Objekten, einer Terminverwaltungsdatenbank, und dergleichen. Das zur Darstellung der Menüleiste verwendete Programmobjekt fragt diese Datenbank periodisch ab und stellt Änderungen fest, die entsprechend bei Bedarf umgesetzt werden beziehungsweise stellt die entsprechenden Informationen gemäß dem erfindungsgemäßen Verfahren dar.

Alternativ ist es ebenfalls möglich, das zur Menüleiste gehörige Programmobjekt so zu implementieren, dass es lediglich eine rudimentäre Funktion zur Darstellung der Menüsymbole und Menüpunkte und Auswahlpunkte umfasst und die Informationen jeweils von den Programmobjekten bezieht, die den Menüsymbolen und dergleichen zugeordnet sind. Dies erfordert es, dass die jeweils zu verwendenden Programmobjekte bei bestimmten Aspekten der Erfindung periodisch gestartet werden, um die notwendigen Informationen verfügbar zu machen. Bei einer Darstellung der Übersichtsinformation ist ein Start des jeweils übersichtsmäßig darzustellenden Programmobjekts nicht unbedingt notwendig, da diese Information in der Regel auch vorher gewonnen werden kann, es kann jedoch auch dort aus Performancegründen (Geschwindigkeit der Darstellung der Übersichtsinformation) sinnvoll sein, die jeweiligen Programmobjekte periodisch zu starten und die für die Übersichtsinformation gewonnenen Informationen in einem Zwischenspeicher abrufbar vorzuhalten.

Sinnvollerweise wird das die Menüleiste steuernde Programmobjekt möglichst tief im Betriebssystem des Datenverarbeitungsgeräts eingebettet, um in einem weitgehenden Zugriff die benötigten Informationen beziehungsweise Programmobjekte zu gestatten.

Das in seinen verschiedenen Aspekten verwirklichte erfindungsgemäße Verfahren ist auf einem Datenverarbeitungsgerät implementiert, beziehungsweise läuft auf diesem ab. Dabei kann das Datenverarbeitungsgerät vorteilhaft als Mobiltelefon ausgebildet sein. Das Datenverarbeitungsgerät weist eine Anzeigeeinrichtung mit einer Anzeige auf, bei der es sich beispielsweise um ein Display oder dergleichen handeln kann. Weiterhin verfügt das Datenverarbeitungsgerät über wenigstens eine zentrale Rechnereinheit sowie wenigstens eine Speichereinrichtung. Ferner umfasst das Datenverarbeitungsgerät Mittel zur Durchführung der wie vorstehend beschriebenen erfindungsgemäßen Verfahrensaspekte. Ausgestaltungen, Details und Aspekte, die im Zusammenhang mit den erfindungsgemäßen Verfahrensaspekten beschrieben sind, gelten deshalb selbstverständlich auch im Zusammenhang mit dem Datenverarbeitungsgerät, so dass diesbezüglich auf die vorstehenden Ausführungen vollinhaltlich Bezug genommen und verwiesen wird.

Nachfolgend wird die Erfindung anhand konkreterer Ausführungsbeispiele erläutert, wobei auf die beigefügten Zeichnungen Bezug genommen wird, in denen Folgendes dargestellt ist:
- Fig. 1: zeigt die Anzeige eines Datenverarbeitungsgerätes mit einer Menüleiste;
- Fig. 2: zeigt die Anzeige von Fig. 1 mit einem dargestellten Anzeigenbereich für Übersichtsinformation;
- Fig. 3: zeigt die Menüleiste mit dem Anzeigenbereich von Fig. 2 nach Erfüllen der Umschaltbedingung und Anzeigen einer vorgegebenen Menüauswahl;
- Fig. 4: zeigt die Verwendung des Anzeigenbereichs zur Darstellung von ausgewählten Informationen nach Menüauswahl;
- Fig. 5: zeigt einen aktivierten Menüpunkt mit der Auswahloption zur Aktivierung eines zweiten Bereichs;
- Fig. 6: zeigt die Darstellung eines ausgewählten zweiten Bereichs vor dem Bildschirmhintergrund; und
- Fig. 7: zeigt eine Menüleiste, bei der eines der Menüsymbole nach Vorliegen eines relevanten Ereignisses ein Ereignissymbol anzeigt.

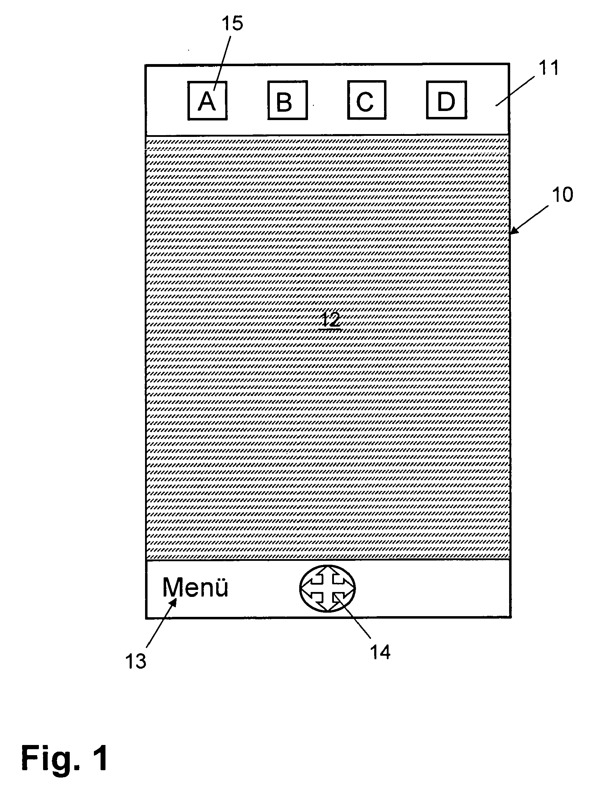

In Fig. 1 ist der Anzeigebereich 10 eines Datenverarbeitungsgerätes, wie beispielsweise eines Mobiltelefons gezeigt. Im oberen Bereich ist eine Menüleiste 11 dargestellt, wobei es sich versteht, dass diese auch in anderen Bereichen des Bildschirmes, beispielsweise unten, am linken oder rechten Bildrand, oder an einem beliebigen anderen Bereich dargestellt sein kann. Darunter schließt sich der mit Schraffur dargestellte Bildschirmhintergrundbereich 12 an, da bei der Darstellung von Fig. 1 keine Programmfenster geöffnet sind. Im unteren Bereich der Anzeige schließlich befindet sich ein Menüpunkt 13 zum Ausklappen eines weiteren Menüs sowie Pfeiltasten 14 zur Bewegung eines Cursors mittels des berührungssensitiven Bildschirms. Die Menüleiste 11 gemäß der Erfindung enthält in der beispielhaften Ausführungsform vier einzelne Menüsymbole 15, die mit A bis D gekennzeichnet sind. Dargestellt ist in Fig. 1 quasi ein Ruhezustand der Menüleiste 11 ohne besondere Hervorhebungen oder Aktionen.

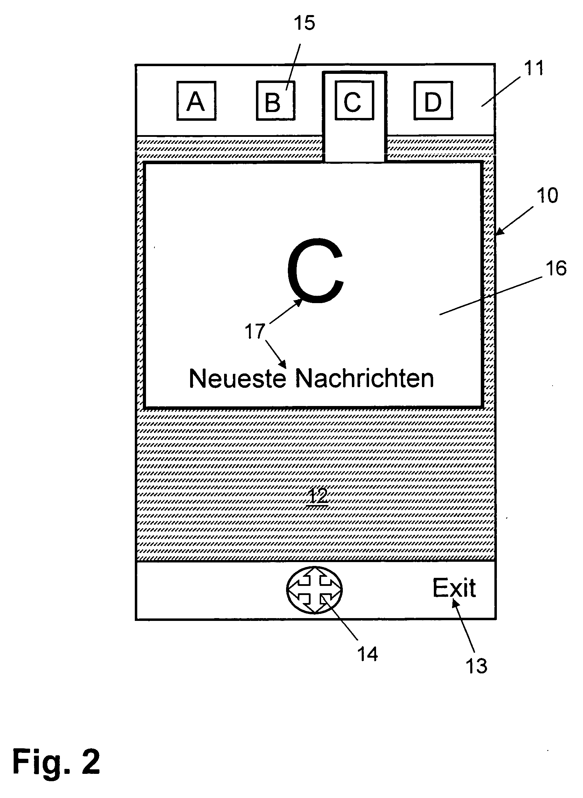

In Fig. 2 hat der Anwender das Menüsymbol C aktiviert, so dass ein Anzeigenbereich 16 unterhalb des Menüs dargestellt ist, in dem eine Übersichtsinformation 17 präsentiert wird, im vorliegenden Fall das Programmsymbol "C" sowie die zusätzliche Information, dass das Programm die neuesten Nachrichten darstellen kann. Die Aktivierung kann dabei durch Berühren des berührungssensitiven Bildschirms, mittels einer Maus oder durch Tasten oder Scroll-Räder am Gerät erfolgen.

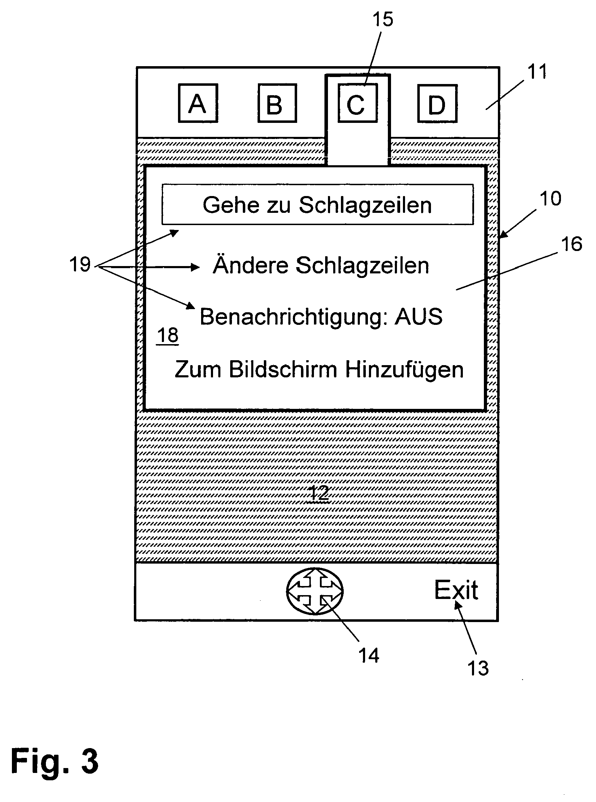

Fig. 3 zeigt die Situation nach dem Feststellen des Vorliegens einer Umschaltbedingung. Die Umschaltbedingung kann beispielsweise der Ablauf eines Zeitraums (z.B. eine Sekunde) sein, in dem die Übersichtsinformation angezeigt wird, bevor zur Menüauswahl 18, die in Fig. 3 dargestellt ist, umgeschaltet wird. Die Menüauswahl enthält verschiedenen Auswahloptionen 19 wie "Gehe zu Schlagzeilen", "Ändere Schlagzeilen", und dergleichen. Die Auswahloptionen 19 können vom Anwender durch Aktivieren, die oben ausgewählt werden, woraufhin das dem Menüpunkt zugewiesene Programmobjekt die ausgewählte Aktion ausführt.

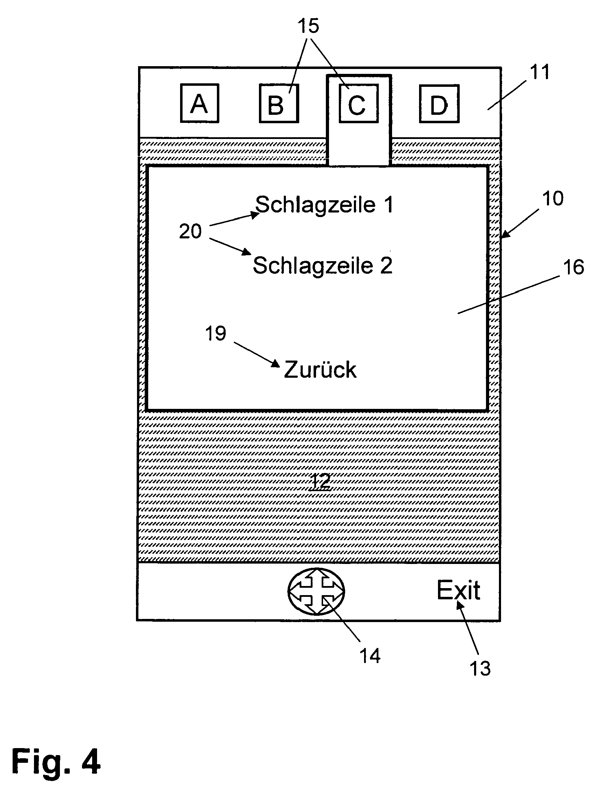

In einer weiteren bevorzugten Ausführungsform, die in Fig. 4 dargestellt ist, kann auch die eigentliche Informationsdarstellung nach Aktivieren einer Auswahloption 19, im vorliegenden Fall das Darstellen von Schlagzeilen 20 nach der Aktivierung der Auswahloption 19 "Gehe zu Schlagzeilen" im Anzeigenbereich 16 selbst und nicht in einem separaten Programmfenster des ausgewählten Programmobjekts stattfinden.

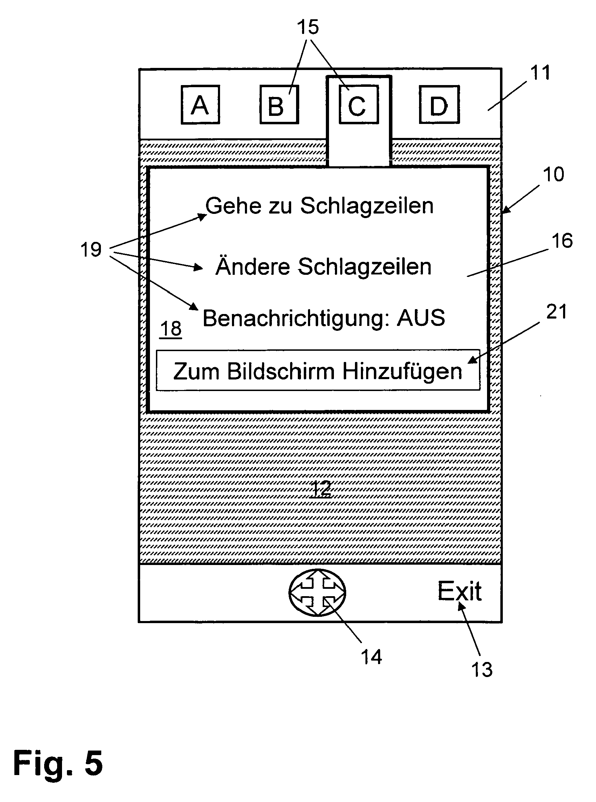

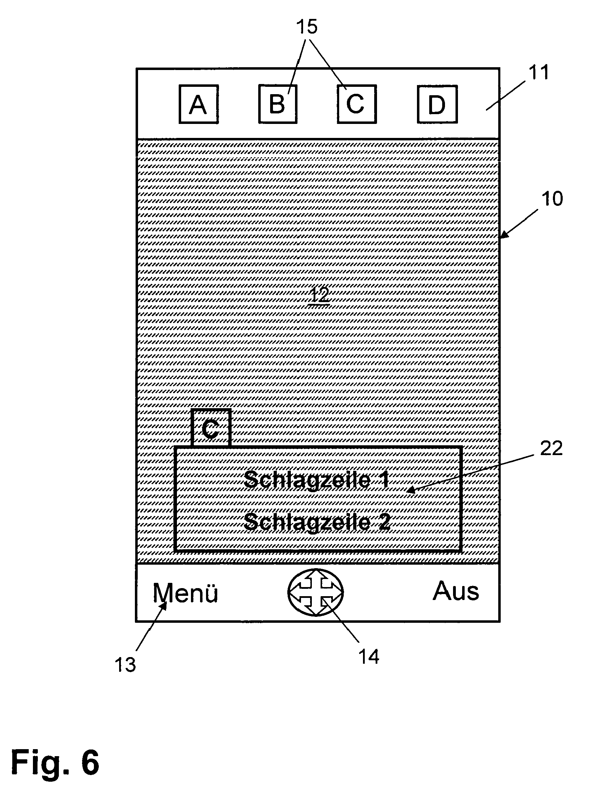

Fig. 5 stellt den dritten Aspekt des erfindungsgemäßen Verfahrens dar, bei dem ein Menü 16 (im vorliegenden Fall angezeigt im selben Anzeigenbereich 16 für Übersichtsinformation 17) zum aktivierten Menüpunkt C dargestellt wird und die Auswahloption 21 "Zum Bildschirm hinzufügen" vom Anwender aktiviert worden ist, wie durch die Umrandung zu erkennen, so dass ein Programmobjekt aufgerufen wird, dass in einem zweiten, festgelegten Bereich 22 der Anzeige 10 Informationen anzeigt. Diese Anzeige wird in Fig. 6 dargestellt, bei der im unteren Bereich des Bildschirms Schlagzeilen des Schlagzeilenprogrammobjekts, das dem Menüpunkt c zugewiesen ist, angezeigt werden.

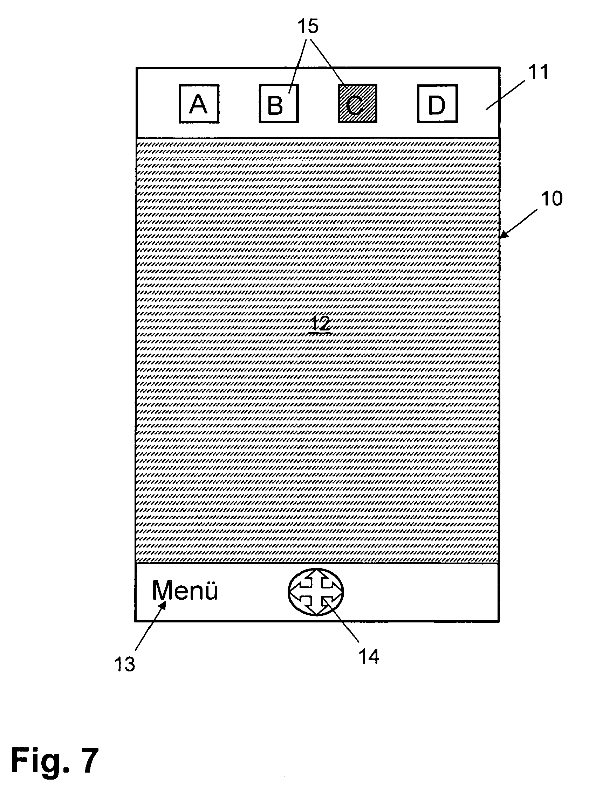

Fig. 7 schließlich zeigt, wie sich beispielsweise beim Vorliegen neuer, vom Anwender noch nicht gelesener Schlagzeilen, das Menüsymbol zum Menüpunkt C verändert, im vorliegenden Fall durch eine Schraffur des Menüsymbols 15.

Die vorliegende Erfindung offeriert zahlreiche neuartige Aspekte und Vorteile für die Verwendung von Datenverarbeitungsgeräten. Nachfolgend soll beispielhaft der Einsatz des erfindungsgemäßen Verfahrens skizziert werden. Wenn der Anwender sein Gerät zuerst einschaltet beziehungsweise bei Klappgeräten öffnet und auf den Ausgangsbildschirm blickt, bekommt er einen sofortigen visuellen Status über unterschiedliche Informationen wie zum Beispiel Push-Nachrichten (z.B. neue SMS/MMS, neue E-Mail) und den Push-Inhalt (z.B. eine neue Demoversion des Spiels der Woche). Wenn der Anwender einen Menüleistenpunkt auswählt, erscheint ein ausgedehnter "Pop-up"-Anzeigenbereich, der eine Beschreibung des Menüleistenmerkmals und verschiedene auswählbare Verknüpfungen und Abkürzungen zeigt. Falls beispielsweise der "Neues Spiel"-Statusindikator (Ereignismenüsymbol) erscheint, kann der Anwender beim Auswählen dieses Menüpunkts mehr über das Spiel herausfinden, das Spiel ausprobieren, zum Spielebereich eines Portals gehen, und dergleichen.

### Gestaltung des Bildschirmhintergrunds

Wenn der Anwender ein Menüsymbol aktiviert, ist eine der Auswahloptionen, die zur Verfügung stehen (beispielsweise unter einem Softkey "Optionen") "zum Bildschirm hinzufügen" beziehungsweise "add to home screen". Dies gestattet es dem Anwender, Informationen zum Bildschirmhintergrund des Datenverarbeitungsgeräts hinzuzufügen. Falls der Anwender beispielsweise wünscht, den Bildschirmhintergrund mit dem Inhalt von E-Mails anzupassen, könnten immer die drei letzten E-Mail-Nachrichten (Datum, Betreff) auf dem Bildschirmhintergrund erscheinen und dynamisch aktualisiert werden.

Anpassungen der Menüleiste können leicht vom Benutzer vorgenommen werden. Dies stellt einen Ansatz zur Personalisierung der Menüleiste gemäß Benutzerpräferenzen dar. Beispielsweise kann der Anwender Abkürzungen für andere Bereiche des Datenverarbeitungsgerätmenüs in die Menüleiste aufnehmen oder existierende Punkte (zum Beispiel Spiele) entfernen, die für ihn nicht relevant sind.

Nachfolgend sollen Paradigmen der Benutzeroberfläche des erfindungsgemäßen Verfahrens an einem weiteren Beispiel erläutert werden.

Der Ausgangsbildschirm besteht anfangs aus einer Menüleiste, die aus einem beschränkten Satz von lcons (z.B. SMS, MMS, E-Mail, Spiele, Musik, Klingeltöne, Alarm, Kalender) bestehen. Diese lcons werden aktiv und animiert (durch Darstellung eines Ereignismenüsymbols), wenn sich der Status der zugrunde liegenden Gegenstände ändert, zum Beispiel eine neue Nachricht oder ein neuer Inhalt empfangen wurde oder eine neue Kalenderverabredung oder ein Alarm erreicht wird. Es gibt einen Satz von Optionen, die mit dem linken Softkey für jedes Menüsymbol erreichbar sind. Diese Funktionalität erfordert es, dass Push-Fähigkeiten den existierenden Inhaltsplattformen beziehungsweise Core Stacks hinzugefügt werden müssen.

Die Menüleiste beinhaltet aktive Menüsymbole für Push-Nachrichten. Wenn eine neue Push-Nachricht (SMS, MMS oder E-Mail) empfangen wird, wird das Menüsymbol aktiviert beziehungsweise animiert. Die assoziierten Optionen enthalten Abkürzungen für den Anwender, um die Nachricht unmittelbar zu lesen, zu löschen, etc. Hierfür kann es erforderlich sein, dass die Terminalnachrichtenanwendungen mit der Menüleiste interagieren müssen.

Die Menüleiste enthält aktive Menüsymbole für Push-Inhalte. Wenn ein neuer Push-Inhalt-Gegenstand (zum Beispiel ein Spiel, ein Klingelton, Musik) empfangen wird, wird das Menüsymbol aktiviert oder animiert. Die assoziierten Optionen gestatten es dem Anwender, zu einer anderen Stelle im Menü zu gelangen, wo er mehr Details, eine Vorschau, und dergleichen von den empfangenen Inhalten bekommen können oder sie sogar kaufen kann.

Die Menüleiste beinhaltet weiterhin aktive Menüsymbole für zeitrelevante Funktionen, wie etwa Kalenderverabredungen, Alarme, Geburtstagserinnerungen, und dergleichen. Man nehme eine dieser Funktionen "den Status wechselt" (zum Beispiel dass eine verabredete Zeit erreicht ist), wird das Menüsymbol aktiviert bzw. animiert. Die assoziierten Optionen gestatten es dem Anwender, den Status der Funktion zu verändern (zum Beispiel den Alarm abzuschalten) oder zur vollständigen Terminverwaltungsfunktionalität innerhalb des Menüs des Datenverarbeitungsgerätes zu kommen.

Ein weiteres Merkmal ist die Fähigkeit, dass der Anwender ein oder mehrere Menüleistenobjekte auswählen kann, so dass diese einen Bereich des Bildschirmhintergrundes mit einer vollständigen Version des Inhalts füllen, falls der Anwender beispielsweise entscheidet, E-Mails zu seinem Bildschirmhintergrund hinzuzufügen, würden Mailnachrichten dort angezeigt und dynamisch aktualisiert.

### Bezugszeichenliste

- 10: Anzeigebereich
- 11: Menüleiste
- 12: Bildschirmhintergrundbereich
- 13: spezieller Menüpunkt
- 14: Pfeiltasten für Cursorbewegung
- 15: Menüsymbol
- 16: Anzeigenbereich
- 17: Übersichtsinformation
- 18: Menüauswahl
- 19: Auswahloptionen
- 20: Darstellung von Schlagzeilen
- 21: Auswahloption zur Zuweisung des zweiten Bereichs
- 22: Zweiter Bereich

## Patentansprüche

1. Verfahren zum dynamischen Umschalten eines Anzeigenbereichs (16) von Menüpunkten (15) einer Menüleiste (11) einer Anzeige (11) eines Datenverarbeitungsgeräts, **gekennzeichnet durch** folgende Schritte: beim Aktivieren eines der Menüpunkte (15) **durch** einen Anwender, Anzeigen eines Anzeigenbereichs (16) zu dem Menüpunkt (15); Ausführen eines Programmobjekts, das eine Übersichtsinformation (17) zu dem Menüpunkt (15) in dem Anzeigenbereich (16) darstellt; Feststellen des Vorliegens einer Umschaltbedingung; beim Erfüllen der Umschaltbedingung, Anzeigen einer vorgegebenen Menüauswahl (18) zu einem Programmobjekt, das dasselbe Programmobjekt sein kann wie das zur Anzeige der Übersichtsinformation (17) verwendete oder ein anderes, im dem Anzeigenbereich.

2. Verfahren gemäß Anspruch 1, **dadurch gekennzeichnet, dass** die Umschaltbedingung darin besteht, dass der Benutzer innerhalb eines vorgegebenen Zeitraums keinen anderen Menüpunkt (15) aktiviert und/oder dass die Umschaltbedingung darin besteht, dass der Benutzer den Anzeigenbereich (16) aktiviert.

3. Verfahren gemäß Anspruch 1 oder 2, **dadurch gekennzeichnet, dass** die Menüauswahl (18) zumindest eine Auswahloption (21) aufweist, bei deren Aktivierung ein Programmobjekt aufgerufen wird, das in einen festgelegten Bereich (22) der Anzeige Informationen anzeigt, wobei ein Fenstermanager-Programmobjekt zur Verwaltung der Anzeige (10) des Datenverarbeitungsgeräts diesen Bereich der Anzeige (10) stets unmittelbar vor einem Bildschirmhintergrund (12), aber hinter anderen vom Fenstermanager-Programmobjekt angezeigten Fenstern anzeigt.

4. Verfahren gemäß einem der Ansprüche 1 bis 3, **dadurch gekennzeichnet, dass** zumindest einer der Menüpunkte (15) der Menüleiste (11) ein Menüsymbol ist.

5. Verfahren gemäß einem der Ansprüche 1 bis 4, **dadurch gekennzeichnet, dass** die Übersichtsinformation (17) ein Programmsymbol und/oder einen Programmnamen umfasst und/oder dass die Übersichtsinformation (17) eine zum Zeitpunkt der Aktivierung vom Programmobjekt als am relevantesten angesehene Information umfasst.

6. Verfahren zum Ereignis-abhängigen Umschalten zwischen Menüsymbolen (15) in einer Menüleiste (11) einer Anzeige (10) eines Datenverarbeitungsgeräts, **gekennzeichnet durch** folgende Schritte: Anzeigen von Standardmenüsymbolen zu Programmobjekten in der Menüleiste (11); Feststellen des Vorliegens eines relevanten Ereignisses zu einem der Programmobjekte; und Anzeigen eines Ereignismenüsymbols anstelle des Standardmenüsymbols (15) für das Programmobjekt, für das sich das relevante Ereignis ereignet hat.

7. Verfahren gemäß Anspruch 6, **gekennzeichnet durch** die weiteren Schritte: Feststellen, dass ein Anwender des Datenverarbeitungsgeräts mit dem Datenverarbeitungsgerät in einer Weise interagiert hat, dass eine fortgesetzte Anzeige des Ereignissymbols nicht mehr notwendig ist; und Anzeigen des Standardmenüsymbols (15) für das Programmobjekt.

8. Verfahren zum Zuweisen eines Bereichs einer von einem Fenstermanager-Programmobjekt verwalteten Anzeige (10) eines Datenverarbeitungsgeräts zu einem Programmobjekt, **gekennzeichnet durch** folgende Schritte: Darstellen einer Menüleiste (11) mit einer Mehrzahl von Menüpunkten (15) in einem ersten Bereich (16) der Anzeige (10); beim Aktivieren eines Menüpunkts (15) der Menüleiste (11) **durch** einen Anwender, Anzeigen eines Menüs (18) zu dem aktivierten Menüpunkt, wobei das Menü zumindest eine Auswahloption (21) aufweist, bei deren Aktivierung ein Programmobjekt aufgerufen wird, das in einen zweiten, festgelegten Bereich (22) der Anzeige Informationen anzeigt, wobei das Fenstermanager-Programmobjekt diesen zweiten Bereich (22) der Anzeige stets unmittelbar vor einem Bildschirmhintergrund (12), aber hinter anderen vom Fenstermanager-Programmobjekt angezeigten Fenstern anzeigt.

9. Verfahren gemäß Anspruch 8, **dadurch gekennzeichnet, dass** der Bildschirmhintergrund ein Bild, eine Graphik, ein Muster oder eine einfarbige Fläche ist und die Anzeige der Informationen so erfolgt, dass die Informationen semitransparent vor dem Bildschirmhintergrund (12) angezeigt werden.

10. Verfahren gemäß Anspruch 8 oder 9, **dadurch gekennzeichnet, dass** der Bildschirmhintergrund (12) ein Bild, eine Graphik, ein Muster oder eine einfarbige Fläche ist und die Anzeige der Informationen in einer Farbe erfolgt, die in einem gut erkennbaren Kontrast zur vorherrschenden Farbe des Bildschirmhintergrunds steht.

11. Verfahren gemäß einem der Ansprüche 1 bis 10, **dadurch gekennzeichnet, dass** die Menüpunkte und Menüsymbole (15) der Menüleiste (11) benutzerkonfigurierbar sind.

12. Verfahren gemäß einem der Ansprüche 1 bis 11, **dadurch gekennzeichnet, dass** das Verfahren auf einem mobilen Endgerät wie einem Mobiltelefon oder einem Personal Digital Assistent (PDA) ausgeführt wird.
